# EUROPEAN PATENT SPECIFICATION

(11) **EP 1 422 775 B1**
(45) Date of publication and mention of the grant of the patent: **24.08.2005**
(21) Application number: 03023110.4
(22) Date of filing: 10.10.2003
(51) Int. Cl.: H01M 8/02

(54) **Fuel cell with separator plates having comb-shaped gas passages**
Brennstoffzelle mit Gasverteilerplatten mit kammartigem Gaspassagen
Pile à combustible ayant des plaques séparatrices à passages du gaz en forme de peigne

(30) Priority: 08.11.2002 JP 2002324950
(43) Date of publication of application: 26.05.2004
(73) Proprietor: NISSAN MOTOR CO., LTD., Kanagawa-ken (JP)
(72) Inventor: Zhang, Jianbo, Yokosuka-shi Kanagawa 237-0062 (JP); Miyazawa, Atsushi, Yokosuka-shi Kanagawa 238-0023 (JP)
(74) Representative: Hager, Thomas Johannes

(56) References cited:
- EP-A- 1 063 717
- WO-A-00/17952
- US-A- 5 300 370
- PATENT ABSTRACTS OF JAPAN vol. 1999, no. 04, 30 April 1999 (1999-04-30) & JP 11 016591 A (MATSUSHITA ELECTRIC IND CO LTD), 22 January 1999 (1999-01-22)

## Description

### TECHNICAL FIELD OF THE INVENTION

This invention relates to a constitution of a gas passage and a cooling water passage in a fuel cell.

### BACKGROUND OF THE INVENTION

In a polymer electrolyte fuel cell, as the state of humidification of the electrolyte membrane decreases, ion conductivity drops, causing an increase in the resistance overpotential, and therefore the electrolyte membrane must be sufficiently humidified. Conversely, when the amount of water on the electrode surface or gas diffusion layer increases, the diffusion of reaction gas to the electrodes is obstructed, causing an increase in the diffusion overpotential.

As the cathode side passage nears the downstream discharge port, humidity rises and the vaporization speed of the water generated in the electrodes decreases. Thus water accumulates in the electrodes and on the gas diffusion layer, making flooding likely to occur. In order to prevent flooding, the flow rate is often increased such that water is discharged forcibly, but when the gas flow rate is increased, pressure loss increases, causing an increase in demand on the blower and a decrease in the efficiency of the fuel cell system as a whole.

In order to solve this problem, JP11-16591A, published by the Japan Patent Office in 1999, employs a constitution in which a gas supply passage that communicates with a gas supply port and a gas discharge passage that communicates with a gas discharge port are separated such that all of the gas in the gas supply passage passes through the electrode layer and catalyst layer to be discharged to the gas discharge passage. According to this constitution, water droplets and unwanted gas such as nitrogen in the vicinity of the catalyst layer is forcibly discharged, and hence gas no longer has to be blown at high pressure and high speed.

### SUMMARY OF THE INVENTION

The aforementioned constitution may have an excellent drainage property, but when the fuel cell is driven in a state of such low humidity that the dew point of the supplied gas falls far below the temperature of the fuel cell, the gas drains water from the electrolyte membrane such that the electrolyte membrane dries and electrical resistance increases. This problem is particularly striking near the cathode passage inlet.

It is therefore an object of this invention to enable an electrolyte membrane to be sufficiently humidified even when a fuel cell is driven in a state of low humidity. A further object of this invention is to prevent flooding caused when water generated in the electrodes accumulates in the electrodes and on the gas diffusion layer.

In order to achieve above-mentioned object, this invention provides a fuel cell comprising a membrane electrode assembly having an electrolyte membrane interposed between a catalyst layer and a gas diffusion layer on both sides thereof, and a cathode side bipolar plate and an anode side bipolar plate provided on opposite sides of the membrane electrode assembly, an oxidizer gas passage being formed in the cathode side bipolar plate and a fuel gas passage being formed in the anode side bipolar plate.

The oxidizer gas passage formed in the cathode side bipolar plate comprises an upstream side gas passage which communicates with an oxidizer gas supply port, a first comb tooth-form gas passage provided downstream of the upstream side gas passage, which communicates with the upstream side gas passage but does not communicate with an oxidizer gas discharge port, and a second comb tooth-form gas passage provided downstream of the upstream side gas passage, which does not communicate with either the upstream side gas passage or the first comb tooth-form gas passage, but communicates with the oxidizer gas discharge port.

The details as well as other features and advantages of this invention are set forth in the remainder of the specification and are shown in the accompanying drawings.

### BRIEF DESCRIPTION OF THE DRAWINGS

FIG. 1 is a schematic diagram of a fuel cell according to this invention.

FIG. 2 is a sectional view of a membrane electrode assembly.

FIG. 3 is a view showing a constitution of a gas passage in a cathode side bipolar plate.

FIG. 4 is a view showing another example of a constitution of a gas passage in the cathode side bipolar plate.

FIG. 5 is a view showing a constitution of a gas passage in an anode side bipolar plate.

FIG. 6 is a view showing a constitution of a cooling water passage in a cooling water plate.

### DESCRIPTION OF THE PREFERRED EMBODIMENTS

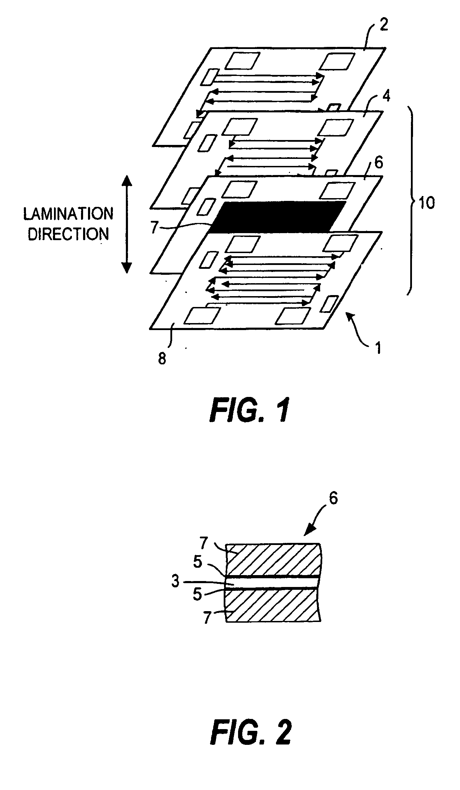

Referring to FIG. 1 of the drawings, a fuel cell 1 according to this invention is constituted by laminating together unit cells 10 comprising a cooling water plate 2, a cathode side bipolar plate 4, a membrane electrode assembly 6, and an anode side bipolar plate 8.

As shown in FIG. 2, the membrane electrode assembly 6 comprises catalyst layers 5 on both sides of a polymer electrolyte membrane (electrolyte membrane) 3, and gas diffusion layers 7 covering the outer sides of the catalyst layers 5. The membrane electrode assembly 6 is interposed between the cathode side bipolar plate 4 and anode side bipolar plate 8. A passage for allowing the flow of gas is formed in each of the cathode side bipolar plate 4 and anode side bipolar plate 8, and when oxidizer gas (oxygen, for example) is supplied to the gas passage on the cathode side and fuel gas (hydrogen, for example) is supplied to the gas passage on the anode side, the gas flows into the gas diffusion layer 7, causing an electrochemical reaction in the catalyst layer 5 such that electrical energy can be emitted outside.

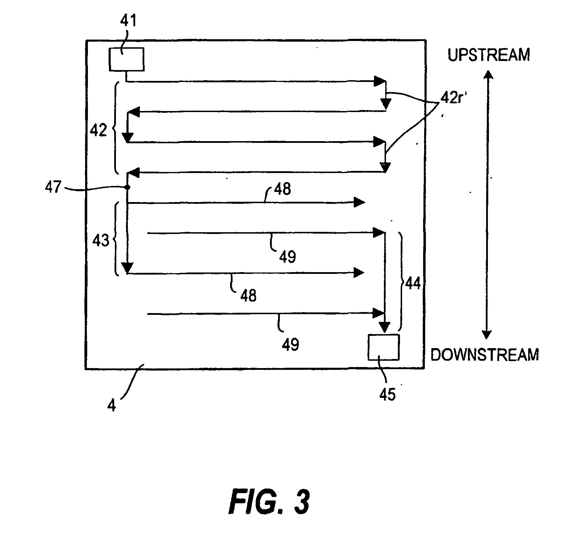

Referring to FIGS. 3 through 6, the constitution of the gas passages formed in the cathode side bipolar plate 4 and anode side bipolar plate 8, and the cooling water passage formed in the cooling water plate 2 will be described.

FIG. 3 is a view of the cathode side bipolar plate 4 seen from the membrane electrode assembly 6 side. A gas supply port 41 and a gas discharge port 45 open in the top left and bottom right of the drawing respectively. Oxidizer gas introduced from the gas supply port 41 passes through the gas passage formed in the plate 4 and flows in the downward direction of the drawing to be discharged from the gas discharge port 45. The arrows depicted on the plate 4 in the drawing indicate the flow direction of the oxidizer gas.

The gas passage formed in the plate 4 is constituted by an upstream side gas passage 42 which communicates with the gas supply port 41, a first comb tooth-form gas passage 43 provided downstream of the upstream side gas passage 42, which communicates with the furthest downstream portion of the upstream side gas passage 42 but does not communicate with the gas discharge port 45, and a second comb tooth-form gas passage 44 provided downstream of the upstream side gas passage 42, which communicates with the gas discharge port 45 but does not communicate with either the upstream side gas passage 42 or the first comb tooth-form gas passage 43. To facilitate the following description, the connecting position of the upstream side gas passage 42 and first comb tooth-form gas passage 43 will be referred to as an intermediate connection point 47.

The upstream side gas passage 42 is a series of passages meandering between the gas supply outlet 41 and intermediate connection point 47 so as to connect the gas supply outlet 41 and intermediate connection point 47. The upstream side gas passage 42 comprises double-back portions 42r for reversing the flow direction of the gas, and is constructed such that the oxidizer gas supplied from the gas supply port 41 flows downstream in a wide reciprocating motion between the left and right of the plate 4. It should be noted that a plurality of the upstream side gas passages 42 may be provided, and an optimum number of passages is set according to the driving conditions of the fuel cell 1.

The first comb tooth-form gas passage 43 which extends downstream from the intermediate connection point 47 bifurcates into the form of comb teeth, and comprises a plurality of blind alley-form branch passages 48 which do not communicate with either the second comb tooth-form gas passage 44 or the gas discharge port 45. The second comb tooth-form gas passage 44 which extends upstream from the gas discharge port 45 similarly bifurcates into the form of comb teeth, and comprises a plurality of blind alley-form branch passages 49 which do not communicate with either the first comb-tooth form gas passage 43 or the intermediate connection point 47. The first comb tooth-form gas passage 43 and second comb tooth-form gas passage 44 are constituted such that the respective branch passages 48, 49 thereof are disposed alternately in succession from the upstream side, whereby a branch passage of one comb tooth-form gas passage is inserted between two branch passages of the other comb tooth-form gas passage. The two comb tooth-form gas passages 43, 44 do not communicate directly with each other, and hence the gas which flows into the first comb tooth-form gas passage 43 passes through the electrode layer and catalyst layer 5 before flowing into the second comb tooth-form gas passage 44 or the anode side gas passage on the opposite side.

In short, of the entire passage region, the passage region on the comparatively upstream side is constituted by the series of passages connecting the gas supply port 41 and intermediate connection point 47, and the passage region further downstream than the upstream side passage region is constituted by the plurality of blind alley-form branch passages which do not communicate with each other.

According to this passage constitution, gas flows through the upstream side of the cathode side without resistance, and hence drainage on the upstream side can be suppressed and the problem of the electrolyte membrane tending to dry out on the upstream side can be solved even during driving in a state of low humidity in which the gas dew point is much lower than the fuel cell temperature. On the downstream side, gas is passed through the plate forcibly so as to pass through the electrode layer and catalyst layer 5 and reach the gas discharge port 45, and thus water droplets and unwanted gas such as nitrogen in the vicinity of the catalyst layer 5 is forcibly discharged. As a result of this superior drainage property and superior gas distribution property to the catalyst, the performance and efficiency of the fuel cell can be improved.

The proportion of the surface area of the gas diffusion layer 7 covering the upstream side passage region in which the non-comb tooth-form upstream side gas passage 42 is formed to the entire surface area of the cathode side gas diffusion layer 7 (≡ " the proportion of all of the gas passages 42, 43, 44 on the plate 4 occupied by the upstream side gas passage 42) is set according to the humidity conditions required by the fuel cell. As the humidity at which the fuel cell 1 is driven decreases, the proportion of the upstream side non-comb tooth-form gas passage must be increased so that drainage on the upstream side is suppressed. Hence, as the humidity at which the fuel cell 1 is driven decreases, the position of the intermediate connection point 47 is set further upstream.

If the proportion of the surface area of the gas diffusion layer covering the upstream side region to the entire surface area of the cathode side gas diffusion layer is set to be smaller than one quarter, then the effect of suppressing vaporization on the upstream side cannot be obtained favorably. If, on the other hand, this proportion exceeds one half, then the superior gas distribution property of the comb tooth-form gas passages cannot be sufficiently exhibited. Hence the proportion of the surface area of the gas diffusion layer 7 which covers the upstream side region to the entire surface area of the gas diffusion layer 7 on the cathode side is preferably set in a range of one quarter to one half.

In order to further improve the water retaining property on the upstream side and prevent drying of the electrolyte membrane on the upstream side in this embodiment, the water repelling property of the part of the gas diffusion layer 7 which contacts the upstream side gas passage 42 is set to be lower than the water repelling property of the part of the gas diffusion layer 7 which contacts the comb tooth-form gas passages 43, 44. In order to further suppress vaporization of the water on the upstream side, the void ratio or void size (void diameter, for example) of the part of the gas diffusion layer 7 which contacts the upstream side gas passage 42 is set to be lower than that of the part which contacts the comb tooth-form gas passages 43, 44.

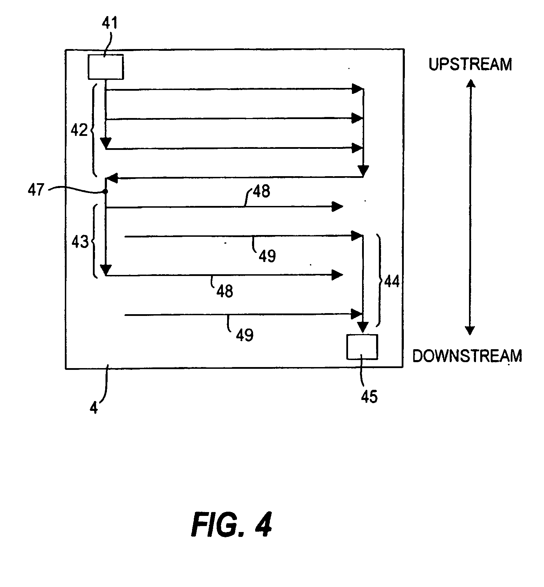

It should be noted that in this embodiment, the upstream side gas passage 42 is a meandering passage comprising the double-back portions 42r, as described above, but the upstream side gas passage 42 may be formed so as to bifurcate into comb tooth-form at a certain point, thereby forming a plurality of parallel branch passages through which oxidizer gas flows in the same direction, whereupon the bifurcated branch passages regroup to communicate with the intermediate connection point 47, as shown in FIG. 4. According to this type of passage pattern (a parallel passage pattern), not only can the effects described above be obtained, but the largest number of passages can be obtained with the same passage sectional area. This is advantageous in that the flow rate through each passage can be increased, pressure loss can be reduced, and the amount of water that is vaporized from the electrolyte membrane can be suppressed.

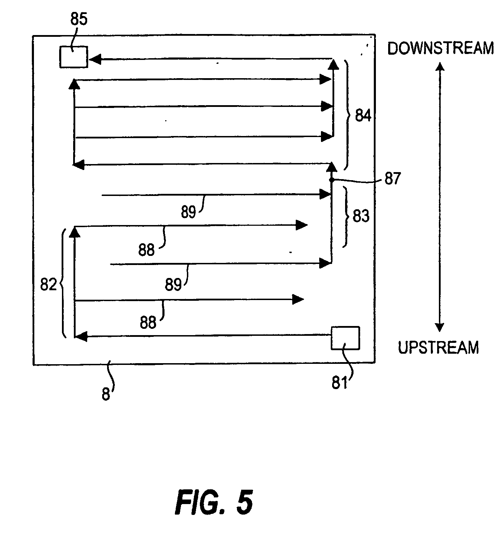

FIG. 5 is a view of the anode side bipolar plate 8 seen from the membrane electrode assembly 6 side. A gas supply port 81 and a gas discharge port 85 open in the bottom right and top left of the drawing respectively. Fuel gas introduced from the gas supply port 81 flows upward in the drawing through a gas passage formed in the plate 8 and is discharged from the gas discharge port 85. The arrows depicted on the plate 8 in the drawing indicate the direction in which the fuel gas flows. The gas flows in a reverse direction to the cathode side bipolar plate 4, and hence the upstream side of the cathode side opposes the downstream side of the anode side through the membrane electrode assembly 6, and the downstream side of the cathode side opposes the upstream side of the anode side through the membrane electrode assembly 6.

The gas passage formed in the anode side bipolar plate 8 is constituted by a first upstream side gas passage 82 which communicates with the gas supply port 81, a second upstream side gas passage 83 which does not communicate with either the first upstream side gas passage 82 or the gas supply port 81, and a downstream side gas passage 84 which communicates with the furthest downstream portion of the second upstream side gas passage 83 and the gas discharge port 85. To facilitate the following description, the position which connects the second upstream side gas passage 82 and the downstream side gas passage 84 will be referred to as an intermediate connection point 87.

The first upstream side gas passage 82 bifurcates into comb tooth-form at a certain point, and the second upstream side gas passage 83 bifurcates into comb tooth-form in a similar manner. The upstream side gas passages 82, 83 each comprise a plurality of branch passages 88, 89 which extend in the horizontal direction of the plate, and these branch passages 88, 89 are disposed such that a branch passage of one of the upstream side gas passages is inserted between two branch passages of the other upstream side gas passage. The downstream side gas passage 84 is formed in a parallel passage pattern which bifurcates into comb tooth-form so as to comprise a plurality of parallel passages through which fuel gas flows in an identical horizontal direction, whereupon the bifurcated branch passages regroup to communicate with the gas discharge port 85.

According to this passage constitution, the upstream side gas passages 82, 83 on the anode side substantially overlap the comb tooth-form gas passages 43, 44 on the cathode side through the membrane electrode assembly 6, and the downstream side gas passage 84 on the anode side substantially overlaps the upstream side gas passage 42 on the cathode side through the membrane electrode assembly 6. By disposing the gas passages in this manner, water diffusion from the cathode side comb tooth-form gas passages 43, 44 to the anode side upstream side gas passage 82 can be precipitated, and the water generated downstream on the cathode side can be used to humidify the gas on the upstream side of the anode side. Simultaneously, water diffusion from the anode side downstream side gas passage 84 to the cathode side upstream side gas passage 42 can be precipitated, and the water content in the fuel gas can be used to humidify the gas on the upstream side of the cathode side. As a result, the amount of water required for humidification can be further reduced and the water content in the electrolyte membrane can be distributed evenly.

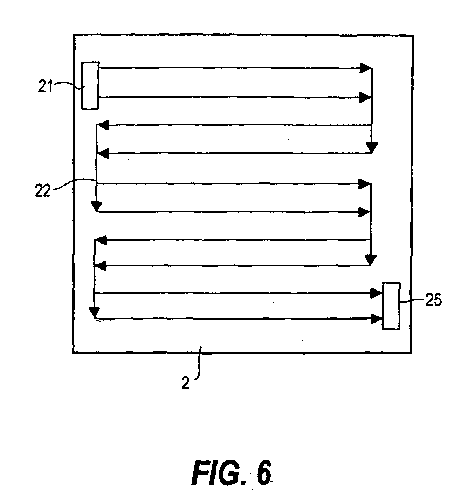

FIG. 6 is a view of the cooling water plate 2 seen from the cathode side bipolar plate 4 side. A water supply port 21 and a water discharge port 25 open in the top left and bottom right of the drawing respectively. Cooling water introduced from the water supply port 21 passes through a cooling water passage 22 of the plate 2, flows downward in the drawing similarly to the flow of the oxidizer gas in the cathode side bipolar plate 4, and thus reaches the water discharge port 25. The arrows depicted on the plate 2 in the drawing indicate the flow direction of the cooling water. The cooling water passage 22, which connects the water supply port 21 and water discharge port 25, is constituted such that an upstream side region thereof contacts the upstream side gas passage 42 on the cathode side and a downstream side region thereof contacts the comb tooth-form gas passages 43, 44 on the cathode side.

According to this type of passage constitution and this positional relationship with the cathode side gas passage, the temperature of the cooling water flowing through the cooling water passage 22 is low on the upstream side and increases toward the downstream side, and hence the gas flowing through the upstream side of the cathode side can be cooled preferentially. If the surface temperature of the electrolyte membrane is uniform, the amount of vaporization of the water moving from the electrolyte membrane into the gas increases toward the upstream side, and the majority of the vaporized water in the gas from the electrolyte membrane is concentrated on the upstream side. However, by cooling the upstream side gas passage on the cathode side preferentially, drying of the electrolyte membrane disposed on the upstream side of the cathode side can be further suppressed.

In the fuel cell according to this invention as described above, the gas passage formed in the cathode side bipolar plate is constituted by an upstream side gas passage which communicates with an oxidizer gas supply port, a first comb tooth-form gas passage provided downstream of the upstream side gas passage, which communicates with the upstream side gas passage but does not communicate with an oxidizer gas discharge port, and a second comb tooth-form gas passage provided downstream of the upstream side gas passage, which communicates with the oxidizer gas discharge port, but does not communicate with either the upstream side gas passage or the first comb tooth-form gas passage. Thus drainage on the upstream side of the cathode side can be suppressed, and the problem of the electrolyte membrane being likely to dry out on the upstream side of the cathode side when the fuel cell is driven at a low humidity can be solved.

In the comb tooth-form gas passages on the cathode side, gas is forcibly passed through the plate, and reaches the gas discharge port on the cathode side or anode side after passing through the electrode layer and catalyst layer. Hence water droplets or unwanted gas such as nitrogen near the catalyst layer is forcibly discharged, enabling improvements in the performance and efficiency of the fuel cell due to superior drainage and distribution of gas to the catalyst. These actions and effects can be improved even further by disposing the branch passages of the first and second comb tooth-form gas passages such that a branch passage of one comb tooth-form gas passage is inserted between two branch passages of the other comb tooth-form gas passage.

Further, by disposing the cathode side first and second comb tooth-form gas passages on the opposite side to the anode side upstream side gas passages through the membrane electrode assembly, the diffusion of water from the comb tooth-form gas passages on the cathode side to the upstream side gas passages on the anode side can be precipitated, and water generated downstream on the cathode side can be used to humidify the gas upstream on the anode side. By disposing the cathode side upstream side gas passage on the opposite side to the anode side downstream side gas passage through the membrane electrode assembly, the diffusion of water from the downstream side gas passage on the anode side to the upstream side gas passage on the cathode side can be precipitated, and the water content of the anode gas can be used to humidify the gas upstream on the cathode side.

Further, by disposing a cooling water passage of a cooling water plate which is disposed overlapping the cathode side bipolar plate such that an upstream side passage of the cooling water passage overlaps the upstream side gas passage on the cathode side, the upstream side gas passage on the cathode side can be cooled preferentially, and thus drying of the electrolyte membrane disposed on the upstream side of the cathode side can be further suppressed.

The proportion of the surface area of the gas diffusion layer covering an upstream side region in which the cathode side upstream side gas passage is formed to the entire surface area of the cathode side gas diffusion layer is set within a range of one quarter to one half. Hence vaporization of water from the electrolyte membrane on the upstream side can be sufficiently suppressed and a superior gas distribution property in the comb tooth-form gas passages can be sufficiently exhibited.

By setting the water repelling property of the part of the gas diffusion layer which contacts the upstream side gas passage on the cathode side to be lower than the water repelling property of the part of the gas diffusion layer which contacts the first and second comb tooth-form gas passages on the cathode side, the water retaining property on the upstream side is further improved and drying of the electrolyte membrane on the upstream side can be prevented. Moreover, by setting the void ratio and void size of the part of the gas diffusion layer which contacts the upstream side gas passage on the cathode side to be lower than the void ratio and void size of the part which contacts the first and second comb tooth-form gas passages on the cathode side, vaporization of water from the electrolyte membrane on the upstream side can be further suppressed.

Although the invention has been described above by reference to a certain embodiment of the invention, the invention is not limited to the embodiment described above. Modifications and variations of the embodiments described above will occur to those skilled in the art, in the light of the above teachings. The scope of the invention is defined with reference to the following claims.

## Claims

1. A fuel cell comprising:
a membrane electrode assembly (6) having an electrolyte membrane (3) interposed between a catalyst layer (5) and a gas diffusion layer (7) on both sides thereof; and
a cathode side bipolar plate (4) and an anode side bipolar plate (8) provided on opposite sides of the membrane electrode assembly (6), an oxidizer gas passage (42, 43, 44) being formed in the cathode side bipolar plate (4) and a fuel gas passage (82, 83, 84) being formed in the anode side bipolar plate,
wherein the oxidizer gas passage (42, 43, 44) formed in the cathode side bipolar plate (4) comprises:
an upstream side gas passage (42) which communicates with an oxidizer gas supply port (41);
a first comb tooth-form gas passage (43) provided downstream of the upstream side gas passage (42), which communicates with the upstream side gas passage (42) but does not communicate with an oxidizer gas discharge port (45); and
a second comb tooth-form gas passage (44) provided downstream of the upstream side gas passage (42), which does not communicate with either the upstream side gas passage (42) or the first comb tooth-form gas passage (43), but communicates with the oxidizer gas discharge port (45).

2. The fuel cell as defined in Claim 1, wherein the upstream side gas passage (42) comprises at least one double-back portion (42r) which reverses the direction in which the gas flows.

3. The fuel cell as defined in Claim 1, wherein the first and second comb tooth-form gas passages (43, 44) bifurcate into comb tooth-form so as to comprise a plurality of blind alley-form branch passages (48, 49), and
the first and second comb tooth-form gas passages (43, 44) are disposed such that a branch passage of one of the comb tooth-form gas passages is inserted between two branch passages of the other comb tooth-form gas passage.

4. The fuel cell as defined in any one of Claim 1 through Claim 3, wherein the gas passage (82, 83, 84) formed in the anode side bipolar plate (8) comprises an upstream side gas passage (82, 83) which communicates with a fuel gas supply port (81), and a downstream side gas passage (84) which communicates with a fuel gas discharge port (85),
wherein the first and second comb tooth-form gas passages (43, 44) on the cathode side are disposed on the opposite side to the upstream side gas passage (82, 83) on the anode side through the membrane electrode assembly (6).

5. The fuel cell as defined in Claim 4, wherein the upstream side gas passage (42) on the cathode side is disposed on the opposite side to the downstream side gas passage (84) on the anode side through the membrane electrode assembly (6).

6. The fuel cell as defined in Claim 1 through Claim 5, further comprising a cooling water plate (2) disposed overlapping the cathode side bipolar plate (4),
wherein the cooling water plate (2) comprises a cooling water passage (22) which connects a cooling water supply port (21) and a cooling water discharge port (25), and an upstream side region of the cooling water passage (22) is disposed so as to overlap the upstream side gas passage (42) on the cathode side.

7. The fuel cell as defined in any one of Claim 1 through Claim 6, wherein the proportion of the surface area of the gas diffusion layer (7) which covers the upstream side region in which the upstream side gas passage (42) on the cathode side is formed to the entire surface area of the cathode side gas diffusion layer (7) is between one quarter and one half.

8. The fuel cell as defined in any one of Claim 1 through Claim 7, wherein a water repelling property of a part of the gas diffusion layer (7) which contacts the upstream side gas passage (42) on the cathode side is lower than a water repelling property of a part of the gas diffusion layer (7) which contacts the first and second comb tooth-form gas passages (43, 44) on the cathode side.

9. The fuel cell as defined in any one of Claim 1 through Claim 8, wherein a void ratio of the part of the gas diffusion layer (7) which contacts the upstream side gas passage (42) on the cathode side is smaller than a void ratio of the part of the gas diffusion layer (7) which contacts the first and second comb tooth-form gas passages (43, 44) on the cathode side.

10. The fuel cell as defined in any one of Claim 1 through Claim 8, wherein a void size of the part of the gas diffusion layer (7) which contacts the upstream side gas passage (42) on the cathode side is smaller than a void size of the part of the gas diffusion layer (7) which contacts the first and second comb tooth-form gas passages (43, 44) on the cathode side.

## Patentansprüche

1. Brennstoffzelle mit:
einer Membranelektrodenanordnung (6) mit einer Elektrolytmembran (3), die zwischen einer Katalysatorschicht (5) und einer Gasdiffusionsschicht (7) auf deren beiden Seiten angeordnet ist; und
einer kathodenseitigen bipolaren Platte (4) und einer anodenseitigen bipolaren Platte (8), die auf den entgegengesetzten Seiten der Membranelektrodenanordnung (6) geschaffen sind;
einer Oxidationsmittel-Gasleitung (42, 43, 44), die in der kathodenseitigen bipolaren Platte (4) ausgebildet ist, und einer Brennstoff-Gasleitung (82, 83, 84), die in der anodenseitigen bipolaren Platte ausgebildet ist,
wobei die Oxidationsmittel-Gasleitung (42, 43, 44), die in der kathodenseitigen bipolaren Platte (4) ausgebildet ist, folgendes aufweist:
eine stromaufwärts liegende Gasleitung (42), die mit einer Oxidationsmittel-Gaszufuhröffnung (41) verbunden ist;
eine erste zahnförmige Kamm-Gasleitung (43), die stromabwärts von der stromaufwärts liegenden Gasleitung (42) angeordnet ist, die mit der stromabwärts liegenden Gasleitung (42), aber nicht mit der Oxidationsmittel-Gasabgabeöffnung (45) verbunden ist; und
eine zweite zahnförmige Kamm-Gasleitung (44), die stromabwärts von der stromaufwärts liegenden Gasleitung (42) angeordnet ist, die nicht entweder mit der stromaufwärts liegenden Gasleitung (42) oder mit der ersten zahnförmigen Kamm-Gasleitung (43), aber mit der Oxidationsmittel-Gasabgabeöffnung (45) verbunden ist.

2. Brennstoffzelle gemäß Anspruch 1, wobei die stromaufwärts liegende Gasleitung (42) mindestens einen Doppelrücken-Bereich (42r) aufweist, der die Richtung, in die das Gas strömt, umkehrt.

3. Brennstoffzelle gemäß Anspruch 1, wobei sich die ersten und zweiten zahnförmigen Kamm-Gasleitungen (43, 44) im zahnförmigen Kamm gabeln, um somit eine Mehrzahl von sackgassen-förmigen Zweigleitungen (48, 49) aufzuweisen, und
die ersten und zweiten zahnförmigen Kamm-Gasleitungen (43, 44) angeordnet sind, so dass eine Zweigleitung von einer der zahnförmigen Kamm-Gasleitungen zwischen zwei Zweigleitungen der anderen zahnförmigen Kamm-Gasleitung eingefügt wird.

4. Brennstoffzelle gemäß einem der Ansprüche 1 bis 3, wobei die Gasleitung (82, 83, 84), die in der anodenseitigen bipolaren Platte (8) ausgebildet ist, eine stromaufwärts liegende Gasleitung (82, 83), die mit einer Brenngas-Zufuhröffnung (81), und eine stromabwärts liegende Gasleitung (84) aufweist, die mit einer Brenngas-Abgabeöffnung (85) verbunden ist,
wobei die ersten und zweiten zahnförmigen Kamm-Gasleitungen (43, 44) auf der Kathodenseite auf der gegenüberliegenden Seite zur stromaufwärts liegenden Gasleitung (82, 83) auf der Anodenseite durch die Membranelektrodenanordnung (6) angeordnet sind.

5. Brennstoffzelle gemäß Anspruch 4, wobei die stromaufwärts liegende Gasleitung (42) auf der Kathodenseite auf der gegenüberliegenden Seite zur stromabwärts liegenden Gasleitung (84) auf der Anodenseite durch die Membranelektrodenanordnung (6) angeordnet ist.

6. Brennstoffzelle gemäß einem der Ansprüche 1 bis 5, die ferner eine Kühlwasserplatte (2) aufweist, die zum Überlappen der kathodenseitigen bipolaren Platte (4) angeordnet ist,
wobei die Kühlwasserplatte (2) eine Kühlwasserleitung (22) aufweist, die eine Kühlwasser-Zufuhröffnung (21) und eine Kühlwasserabgabeöffnung (25) verbindet, und wobei ein stromaufwärts liegender Bereich der Kühlwasserleitung (22) angeordnet ist, um somit die stromaufwärts liegende Gasleitung (42) auf der Kathodenseite zu überlappen.

7. Brennstoffzelle gemäß einem der Ansprüche 1 bis 6, wobei das Verhältnis von der Oberfläche der Gasdiffusionsschicht (7), die den stromaufwärts liegenden Bereich abdeckt, in dem die stromaufwärts liegende Gasleitung (42) auf der Kathodenseite ausgebildet ist, zur gesamten Oberfläche der kathodenseitigen Gasdiffusionsschicht (7) zwischen einem Viertel und einem Halben liegt.

8. Brennstoffzelle gemäß einem der Ansprüche 1 bis 7, wobei eine wasserabweisende Eigenschaft eines Teils der Gasdiffusionsschicht (7), der mit der stromaufwärts liegenden Gasleitung (42) auf der Kathodenseite in Kontakt ist, kleiner als die wasserabweisende Eigenschaft eines Teils der Gasdiffusionsschicht (7) ist, der mit den ersten und zweiten zahnförmigen Kamm-Gasleitungen (43, 44) auf der Kathodenseite in Kontakt ist.

9. Brennstoffzelle gemäß einem der Ansprüche 1 bis 8, wobei eine Porenziffer von dem Teil der Gasdiffusionsschicht (7), der mit der stromaufwärts liegenden Gasleitung (42) auf der Kathodenseite in Kontakt ist, kleiner als die Porenziffer von dem Teil der Gasdiffusionsschicht (7) ist, der mit den ersten und zweiten zahnförmigen Kamm-Gasleitungen (43, 44) auf der Kathodenseite in Kontakt ist.

10. Brennstoffzelle gemäß einem der Ansprüche 1 bis 8, wobei eine Porengröße von dem Teil der Gasdiffusionsschicht (7), der mit der stromaufwärts liegenden Gasleitung (42) auf der Kathodenseite in Kontakt ist, kleiner als die Porengröße von dem Teil der Gasdiffusionsschicht (7) ist, der mit den ersten und zweiten zahnförmigen Kamm-Gasleitungen (43, 44) auf der Kathodenseite in Kontakt ist.

## Revendications

1. Pile à combustible comprenant :
un assemblage d'électrodes à membrane (6) ayant une membrane électrolyte (3) comprise entre une couche de catalyseur (5) et une couche de diffusion de gaz (7) sur les deux côtés de celui-ci ; et
une plaque bipolaire du côté cathodique (4) et une plaque bipolaire du côté anodique (8) placées sur les côtés opposés de l'assemblage d'électrodes à membrane (6), un conduit de gaz oxydant (42, 43, 44) étant formé dans la plaque bipolaire du côté cathodique (4) et un conduit de gaz combustible (82, 83, 84) étant formé dans la plaque bipolaire du côté anodique,
dans laquelle le conduit de gaz oxydant (42, 43, 44) formé dans la plaque bipolaire du côté cathodique (4) comprend :
un conduit de gaz en amont (42) qui communique avec un orifice d'alimentation du gaz oxydant (41) ;
un premier conduit de gaz en dent de peigne (43) placé en aval du conduit de gaz en amont (42), qui communique avec le conduit de gaz en amont (42) mais ne communique pas avec un orifice de décharge du gaz oxydant (45) ; et
un second conduit de gaz en dent de peigne (44) placé en aval du conduit de gaz en amont (42), qui ne communique ni avec le conduit de gaz en amont (42) ni avec le premier conduit de gaz en dent de peigne (43), mais communique avec l'orifice de décharge du gaz oxydant (45).

2. Pile à combustible selon la revendication 1, dans laquelle le conduit de gaz en amont (42) comprend au moins une portion à double fond (42r) qui inverse la direction d'écoulement du gaz.

3. Pile à combustible selon la revendication 1, dans laquelle le premier et le second conduits de gaz en dent de peigne (43, 44) bifurquent en dent de peigne de manière à comprendre une pluralité de conduits d'embranchement en cul-de-sac (48, 49), et
les premier et second conduits de gaz en dent de peigne (43, 44) sont disposés de manière à ce qu'un conduit d'embranchement d'un des conduits de gaz en dent de peigne soit inséré entre deux conduits d'embranchement de l'autre conduit de gaz en dent de peigne.

4. Pile à combustible selon l'une quelconque des revendications 1 à 3, dans laquelle le conduit de gaz (82, 83, 84) formé dans la plaque bipolaire du côté anodique (8) comprend un conduit de gaz en amont (82, 83) qui communique avec un orifice d'alimentation de gaz combustible (81) et un conduit de gaz en aval (84) qui communique avec un orifice de décharge de gaz combustible (85),
dans laquelle les premier et second conduits de gaz en dent de peigne (43, 44) sur le côté cathodique sont disposés sur le côté opposé au conduit de gaz en amont (82, 83) sur le côté anodique via l'assemblage d'électrodes à membrane (6).

5. Pile à combustible selon la revendication 4, dans laquelle le conduit de gaz en amont (42) sur le côté cathodique est disposé sur le côté opposé au conduit de gaz en aval (84) sur le côté anodique via l'assemblage d'électrode à membrane (6).

6. Pile à combustible selon l'une quelconque des revendications 1 à 5, comprenant en outre une plaque d'eau de refroidissement (2) disposée de manière à chevaucher la plaque bipolaire du côté cathodique (4),
dans laquelle la plaque d'eau de refroidissement (2) comprend un conduit pour eau de refroidissement (22) qui relie un orifice d'alimentation d'eau de refroidissement (21) et un orifice de décharge d'eau de refroidissement (25) et une région en amont du conduit d'eau de refroidissement (22) est disposée de manière à chevaucher le conduit de gaz en amont (42) sur le côté cathodique.

7. Pile à combustible selon l'une quelconque des revendications 1 à 6, dans laquelle la proportion de l'aire de la surface de la couche de diffusion de gaz (7) qui couvre la région en amont dans laquelle le conduit de gaz en amont (42) sur le côté cathodique est formé sur la totalité de l'aire de surface de la couche de diffusion de gaz du côté cathodique (7) est entre un quart et une moitié.

8. Pile à combustible selon l'une quelconque des revendications 1 à 7, dans laquelle une propriété de répulsion d'eau d'une partie de la couche de diffusion de gaz (7) qui est en contact avec le conduit de gaz en amont (42) sur le côté cathodique est inférieure à la propriété de répulsion d'eau d'une partie de la couche de diffusion de gaz (7) qui est en contact avec les premier et second conduits de gaz en dent de peigne (43, 44) sur le côté cathodique.

9. Pile à combustible selon l'une quelconque des revendications 1 à 8, dans laquelle le taux de porosité de la partie de la couche de diffusion de gaz (7) qui est en contact avec le conduit de gaz en amont (42) sur le côté cathodique est inférieur au taux de porosité de la partie de la couche de diffusion de gaz (7) qui est en contact avec les premier et second conduits de gaz en dent de peigne (43, 44) sur le côté cathodique.

10. Pile à combustible selon l'une quelconque des revendications 1 à 8, dans laquelle la taille de pore de la partie de la couche de diffusion de gaz (7) qui est en contact avec le conduit de gaz en amont (42) sur le côté cathodique est inférieure à la taille de pore de la partie de la couche de diffusion de gaz (7) qui est en contact avec les premier et second conduits de gaz en dent de peigne (43, 44) sur le côté cathodique.
